# EUROPEAN PATENT SPECIFICATION

(11) **EP 2 759 450 B1**
(45) Date of publication and mention of the grant of the patent: **27.07.2016**
(21) Application number: 13152699.8
(22) Date of filing: 25.01.2013
(51) Int. Cl.: B60R 21/237

(54) **A method of packing an air-bag**
Verfahren zur Verpackung eines Airbags
Procédé d'emballage d'un airbag

(43) Date of publication of application: 30.07.2014
(73) Proprietor: Autoliv Development AB, 447 83 Vårgårda (SE)
(72) Inventor: Johansson, Jack, 438 32 Landvetter (SE); Lindberg, Ken, 44146 Alingsas (SE); Holm, David, 1201 lgh (SE)
(74) Representative: Beattie, Alex Thomas Stewart

(56) References cited:
- EP-A2- 1 580 083
- WO-A1-2013/008732

## Description

THIS INVENTION relates to a method for packing an air-bag, and in particular concerns a method for packing an air-bag into an air-bag module to assist in smooth and effective deployment of the air-bag.

When vehicle air-bags are deployed it is often desired for the air-bags to inflate in a particular order or sequence. One example of this is pedestrian protection air-bags (PPAs).

For instance, a PPA may include a main portion which extends across a lower front edge of a vehicle's windscreen. The primary purpose of the main portion is to provide a cushion in front of the lower edge of the windscreen. It has been found that pedestrians/cyclists often strike the lower edge of a vehicle's windscreen directly during an accident situation, and providing this inflatable cushion again reduces the risk of injury.

At each end of the main portion a further inflatable region of the air-bag is provided, extending generally at right-angles to the main portion and covering a part of one of the vehicle's A-pillars. It will be understood that, while the vehicle's windscreen is relatively hard, the windscreen may break as it is struck by a pedestrian/cyclist, thereby allowing some "give" as the impact takes place. By contrast, the vehicle's A-pillars are very hard and will not crumple to any significant degree if struck by a pedestrian/cyclist. The further inflatable regions of the air-bag are therefore conditioned to inflate over the vehicle's A-pillars, thereby providing additional cushioning in these regions.

EP 1580083 discloses an airbag apparatus wherein both a left airbag section and a right airbag section expand smoothly and substantially evenly from the initial stage of expansion, the left airbag section and the right airbag section are folded firstly to obtain a first folded body elongated in the fore-and-aft direction and, subsequently, the distal sides from a joint belt, which connects the midsections in the expanding direction of the left airbag section and the right airbag section, are opened laterally apart from each other and the rear sides from the joint belt are folded so as to be reduced in width in the fore-and aft direction to obtain the second folded body, and then the lateral width is reduced by the third folding operation to obtain the final folded body.

In some PPAs, the air-bag is initially provided in a sealed module, having a lid that breaks away from the rest of the module when the air-bag begins to inflate. A central region of the main portion may be attached to the lid, for instance by one or more straps.

It is generally desirable that, during a first phase of inflation, the main portion of the air-bag inflates substantially fully. This is because the attachment of the module lid to the air-bag will impede any inflation that is not in a substantially lateral direction (i.e. parallel with the font edge of the windscreen). Only once this has been done, the further inflatable regions should inflate to cover the A-pillars in a second phase of inflation.

As a further consideration, the main portion of the air-bag may be arranged to lift the rear edge of the vehicle's bonnet, to provide further protection for a pedestrian or cyclist that is struck by the vehicle. In this case, it may also be desirable for the main portion to inflate substantially fully in a first phase of inflation, without the further inflatable regions being inflated. This allows the main portion to exert a sufficient upward force on the underside of the bonnet to lift the bonnet away from the vehicle's engine.

It is therefore desirable, during the first phase of inflation, for the air-bag to expand substantially along the longitudinal axis of the main portion, without expanding in any other, lateral directions (except. of course, that the air-bag becomes wider in lateral directions as it inflates).

It is an object of the present invention to seek to provide an improved packing method, and resulting air-bag, of this type.

Accordingly, one aspect of the present invention provides a method of packing an air-bag, the air-bag having an elongate main portion which is arranged substantially along a longitudinal axis, and a secondary portion which, when the air-bag is fully unfolded, protrudes in a direction which is at an angle to the axis, the method comprising the steps of: rolling and/or folding the secondary portion so that the secondary portion at least substantially lies on, and is substantially parallel with, the axis; introducing at least a first part of the secondary portion into an interior of the main portion; and providing a sealing arrangement to hold the first part of the secondary portion within the interior of the main portion.

Advantageously, when the air-bag is fully unfolded, the secondary portion protrudes in a direction which is at an angle of at least 30° with respect to the axis.

Preferably, when the air-bag is fully unfolded, the secondary portion protrudes in a direction which is substantially at right-angles to the axis.

Conveniently, the step of introducing the first part of the secondary portion into the interior of the main portion comprises pushing the first part of the secondary portion into the interior of the main portion in a direction which is substantially parallel with the axis.

Advantageously, the step of introducing the first part of the secondary portion into the interior of the main portion leaves a second part of the secondary portion protruding from the main portion.

Preferably, the method further comprises the step of folding the second part of the secondary portion inwardly towards the main portion so that it does not substantially protrude from the main portion.

Conveniently, introducing the first part of the secondary portion into the interior of the main portion creates a re-entrant fold.

Advantageously, once the first part of the secondary portion has been introduced into the interior of the main portion, a generally circular or annular cavity exists around a region of the first part.

Preferably, the method further comprises the step, after the introduction of the first part of the secondary portion into the interior of the main portion, of folding the second part of the secondary portion so that the second part lies substantially within the circular or annular cavity.

Conveniently, the step of providing a sealing arrangement comprises the step of wrapping a sealing member around an exterior of the air-bag, at or near an end of the main portion thereof.

Advantageously, the sealing element has at least one line or point of weakness formed therein.

Preferably, the air-bag has first and second secondary portions.

Conveniently, the first and second secondary portions are provided at respective opposing ends of the main portion.

Advantageously, the sealing arrangement is formed so that, when the air-bag is inflated by the introduction of compressed gas into the interior of the main portion, the main portion will substantially fully inflate before the sealing arrangement breaks or ruptures to allow the inflation of the secondary portion.

Another aspect of the present invention provides a packaged air-bag, the air-bag having an elongate main portion which is arranged substantially along a longitudinal axis, and a secondary portion which, when the air-bag is fully unfolded, protrudes in a direction which is at an angle to the axis, wherein: the secondary portion is rolled and/or folded and at least a first part thereof is introduced into an interior of the main portion; and a sealing arrangement is provided to hold the first part of the secondary portion within the interior of the main portion.

In order that the invention may be more readily understood embodiments thereof will now be described, by way of example, with reference to the accompanying drawings, in which:
Figure 1 shows an unfolded air-bag;
Figures 2 to 7 show stages in the folding of the air-bag of figure 1; and
Figures 8 to 10 show stages of an alternative folding method.

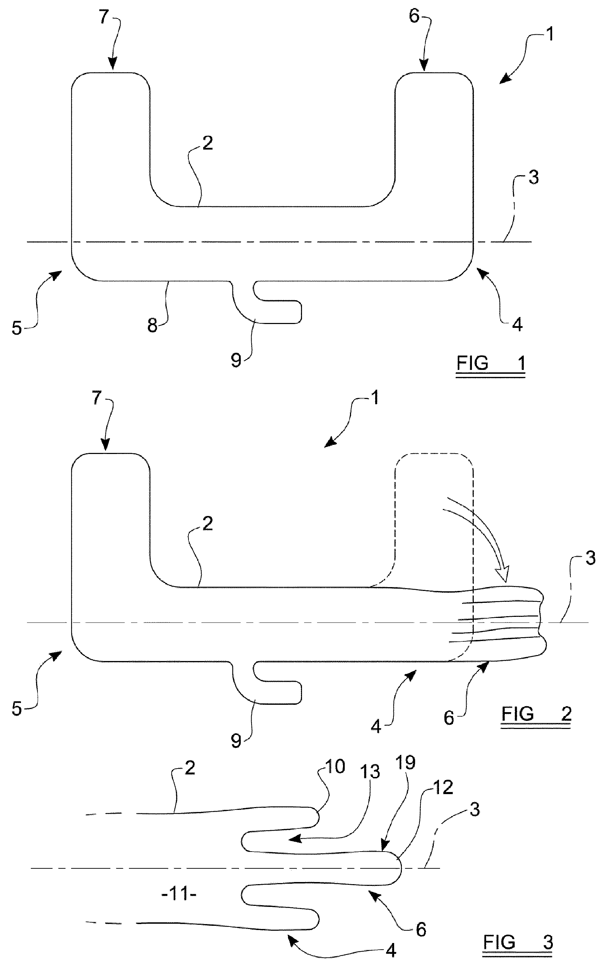

Referring firstly to figure 1 a schematic view of an uninflated PPA 1 is shown. As discussed above the PPA includes a generally elongate main portion 2 having a longitudinal axis 3. At the first and second ends 4, 5 of the main portion 2, respective secondary portions 6, 7 extend (when the air-bag 1 is fully unfolded) generally at right angles to the axis 3. Protruding from the lower (i.e. front) edge 8 of the main portion 2 is an inflation nozzle 9. When the air-bag 1 is to be inflated, compressed gas is introduced into the interior of the air-bag 1 from an inflator (not shown) through the inflation nozzle 9.

In a first step of packing the air-bag 1, one of the secondary portions 6 is rolled and/or folded so that it overlies, and extends substantially parallel with, the axis 3, as shown in figure 2.

In order to fold the secondary portion 6 at this stage, the region where the secondary portion 6 meets the main portion 2 may be folded so that the secondary portion 6 is deflected so as to lie on the axis 3, and folded (for instance z-folded) to bring outlying regions of the secondary portion 6 inwardly. Alternatively, the secondary portion 6 may be folded (again, for instance z-folded) towards the axis 3 without being deflected as a whole.

The secondary portion 6 may be folded by a "chaotic" process, or may be rolled/folded along and/or around distinct, predetermined axes.

Once this stage is complete, the secondary portion 6 will comprise a rolled/folded region that extends from the end 4 of the main portion 2, and is substantially aligned with the main portion 2, extending along the axis 3 thereof.

In a next stage, the secondary portion 6 is pushed inwardly into the interior 11 of the main portion 2, towards the centre thereof, substantially along the axis 3, as shown in figure 3. It will be understood that this forms a re-entrant fold 10 at or near the end 4 of the main portion 2. Preferably, however, the secondary portion 6 is not pushed all the way into the interior 11 of the main portion 2, and a distal end 12 of the secondary portion 6 remains protruding outwardly past the level of the re-entrant fold 10.

As can be appreciated from figure 3, once this stage is complete the end 4 of the main portion 2 has a re-entrant fold 10 at which the secondary portion 6 is pushed inward into the interior 11 of the main portion 2, with the secondary portion 6 then forming a central protrusion 19 from the end 4 of the main portion 2, with a generally circular or annular cavity 13 around this central protrusion 19.

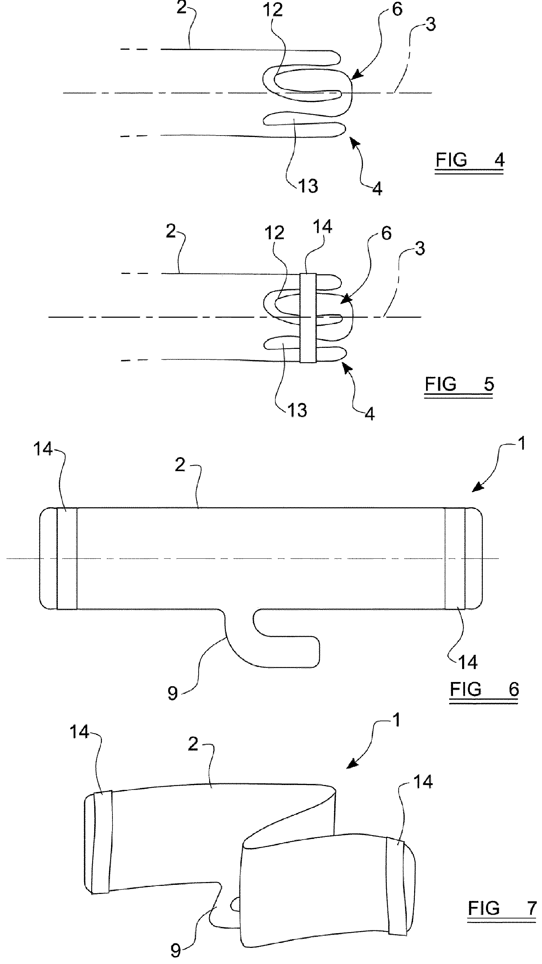

As a next stage, the distal end 12 of the central protrusion 19 is folded into the cavity 13, as shown in figure 4. The protruding part of the secondary portion 6 is therefore folded into, or substantially into, the open end 4 of the main portion 2 formed by the re-entrant fold 10. This is shown in figure 4.

In a next stage, the secondary portion 6 is fastened in this folded position. In the example shown in figure 5, a strip of an adhesive tape 14 is wrapped around the outer surface of the main portion 2 near the end 4 so that, while the tape 14 is in place, the secondary portion 6 cannot readily become unfolded.

The tape 14 is formed so that, when sufficient outward (i.e. radial) forces act on the tape 14, the tape 14 will break or rupture, thus allowing the secondary portion 6 to unfold. The tape 14 may, for instance, be provided with one or more lines of weakness, such as perforations.

The skilled person will understand that there are many other ways in which the folded configuration of the secondary portion 6 may be held in place. For instance, a wrapper may be fitted around the end 4 of the main portion 2, one or more lines of stitching may be formed between regions of the air-bag 1, one or more tabs may be formed on regions of the air-bag 1, releasable tethers may be formed between regions of the air-bag 1, or regions of the air-bag 1 may be welded to one another, for instance, by an ultrasonic welding process. However, it should be understood that the sealing arrangement is provided specifically to maintain the folded condition of the secondary portion 6, and is not part of, for example, a more general cover or housing of the air-bag 1.

Figure 6 shows the air-bag 1 with both secondary portions 6, 7 folded and sealed as described above. As an optional further step, the air-bag 1 may be further folded to decrease its overall length in a direction substantially parallel with the axis 3, for instance by applying a z-fold, as shown schematically in figure 7.

The air-bag 1 is then packed into a housing (not shown), and is ready for installation beneath the central region of the rear edge of a bonnet of a motor vehicle, and connection to a gas generator.

As will be understood by those skilled in the art, when an onboard processor of the vehicle determines that collision with a pedestrian or cyclist is occurring, or is likely to occur, the air-bag module is triggered. Pressurised gas is introduced through the inflation nozzle 9 into the interior of the air-bag 1.

In an initial stage of inflation, the air-bag 1 bursts through a cover of the housing (preferably in a generally upward direction), lifting a lid of the housing away from the remainder of the housing, as discussed above. At this stage the z-fold shown in figure 7 will be unfolded, so that the air-bag 1 returns to the configuration that is generally shown in figure 6.

The main portion 2 of the air-bag 1 will then inflate. During this stage the main portion 2 (or the lid of the housing) may apply an upward force to the underside of the rear of the bonnet, to lift the rear of the bonnet so that the bonnet pivots around its front edge, increasing the distance between the underside of the bonnet and the vehicle's engine. In other embodiments, no lifting of the bonnet may take place. The main portion 2 of the air-bag 1 may also inflate rearwardly from the rear edge of the bonnet, covering the lower part of the vehicle's windscreen.

The strength of the tape 14 (or alternative sealing method) is selected so that, at this stage, the secondary portions 6, 7 remain in their folded positions, and the tape 14 does not break or rupture.

The air-bag 1 remains in this configuration until the main portion 2 is substantially entirely inflated.

Only once the main portion 2 is substantially entirely inflated will the tape 14 (or other sealing arrangement) break/rupture, allowing the secondary portions 6, 7 to unroll and inflate in a direction substantially perpendicular to the axis 3 of the main portion 2 of the air-bag 1, covering all or part of the A-pillars of the vehicle. Following this second phase of inflation the air-bag 1 is generally of the shape shown in figure 1.

It will be understood that, during the first phase of inflation when only the main portion 2 of the air-bag 1 is inflated, the air-bag 1 will only inflate significantly along and around the axis 3, and will not inflate to any significant degree in any other (i.e. radial) directions.

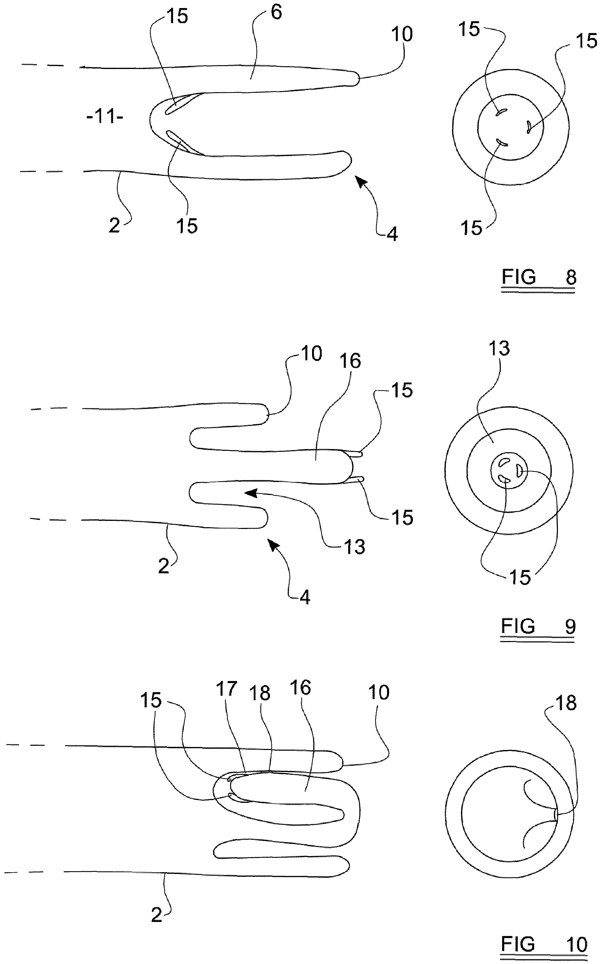

Figures 8 to 10 show an alternative method of folding the secondary portion 6. In each of figures 8 to 10 a schematic cross-sectional view is shown, as in figures 3 to 5, along with corresponding end-on-view.

In this embodiment, a number of flaps 15 are formed on an outer surface of the secondary portion 6, near the distal end thereof.

In a first step, as shown in figure 8, the secondary portion 6 is pushed into the interior 11 of the main portion 2, being turned completely inside-out in the process. It will be understood that this forms, as discussed above, a re-entrant fold 10 at the end 4 of the main portion 2.

When the secondary portion 6 is pushed into the interior 11 of the main portion 2, the flaps 15 lie at or near the region of the secondary portion 6 which is pushed furthest into the interior 11 of the main portion 2.

In a next step, shown in figure 9, the flaps 15 are grasped and pulled outwardly, so that a central region 16 of the secondary portion 6 is pulled outwardly from the end 4 of the main portion 2, and is surrounded by a circular or annular cavity 13. At this point, the situation resembles that shown in figure 3.

In a final step, shown in figure 10, the distal end of the protruding portion 16 is folded over into the circular cavity 13, and is attached to the adjoining inward-facing wall 17 at an attachment point 18 (which may, as discussed above, be formed by any suitable method, for instance sonic welding). As an alternative (or in addition), the distal end may be attached to another part of the central region 16, near the roof thereof.

In embodiments such as this the weld or other join formed at the attachment point 18 is formed with sufficient strength that it will hold as the main portion 2 of the air-bag 1 is substantially fully inflated. Only once this first stage of inflation is complete will be weld or other join formed at the attachment point 18 break, allowing the secondary portion 6 to unfold and inflate, as discussed above.

It will be understood that embodiments of the present invention provide a packing method, and a resulting air-bag, which will reliably inflate in a desired sequence, leading to smooth and efficient deployment of an air-bag.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of packing an air-bag (1), the air-bag (1) having an elongate main portion (2) which is arranged substantially along a longitudinal axis (3), and a secondary portion (6, 7) which, when the air-bag (1) is fully unfolded, protrudes in a direction which is at an angle to the axis (3), the method comprising the steps of:
rolling and/or folding the secondary portion (6, 7) so that the secondary portion (6, 7) at least substantially lies on, and is substantially parallel with, the axis (3);
pushing at least a first part of the secondary portion (6, 7) inwardly into an interior (11) of the main portion (2) towards the centre thereof, substantially along the axis (3) wherein the secondary portion (6,7) forms a re-entrant fold (10) near the end (4) of the main portion (2); and
fastening the first part of the secondary portion (6, 7) within the interior (11) of the main portion (2).

2. A method according to claim 1 wherein the secondary portion (6, 7) forms a central protrusion (19) from the end (4) of the main portion (2), with a generally annular cavity (13) around the central protrusion (19).

3. A method according to claims 1 or 2 wherein, when the air-bag (1) is fully unfolded, the secondary portion (6, 7) protrudes in a direction which is at an angle of at least 30° with respect to the axis (3).

4. A method according to claims 1 to 3 wherein, when the air-bag (1) is fully unfolded, the secondary portion (6, 7) protrudes in a direction which is substantially at right-angles to the axis (3).

5. A method according to any preceding claim wherein the step of introducing the first part of the secondary portion (6, 7) into the interior (11) of the main portion (2) comprises pushing the first part of the secondary portion (6, 7) into the interior (11) of the main portion (2) in a direction which is substantially parallel with the axis (3).

6. A method according to any preceding claim wherein the step of introducing the first part of the secondary portion (6, 7) into the interior (11) of the main portion (2) leaves a second part of the secondary portion (6, 7) protruding from the main portion (2).

7. A method according to claim 6, further comprising the step of folding the second part of the secondary portion (6, 7) inwardly towards the main portion (2) so that it does not substantially protrude from the main portion (2).

8. A method according to claim 6 or 7 wherein introducing the first part of the secondary portion (6, 7) into the interior (11) of the main portion (2) creates a re-entrant fold (10).

9. A method according to claim 8 wherein, once the first part of the secondary portion (6, 7) has been introduced into the interior (11) of the main portion (2), a generally circular or annular cavity (13) exists around a region of the first part.

10. A method according to claim 9, further comprising the step, after the introduction of the first part of the secondary portion (6, 7) into the interior (11) of the main portion (2), of folding the second part of the secondary portion (6, 7) so that the second part lies substantially within the circular or annular cavity (13).

11. A method according to any preceding claim wherein the step of providing a sealing arrangement comprises the step of wrapping a sealing member around an exterior of the air-bag (1), at or near an end of the main portion (2) thereof, and preferably wherein the sealing element has at least one line or point of weakness formed therein.

12. A method according to any preceding claim wherein the air-bag (1) has first and second secondary portions.

13. A method according to claim 12 wherein the first and second secondary portions are provided at respective opposing ends of the main portion (2).

14. A method according to any preceding claim wherein the sealing arrangement is formed so that, when the air-bag (1) is inflated by the introduction of compressed gas into the interior (11) of the main portion (2), the main portion (2) will substantially fully inflate before the sealing arrangement breaks or ruptures to allow the inflation of the secondary portion (6, 7).

15. A packaged air-bag, the air-bag (1) having an elongate main portion (2) which is arranged substantially along a longitudinal axis (3), and a secondary portion (6, 7) which, when the air-bag (1) is fully unfolded, protrudes in a direction which is at an angle to the axis (3), wherein:
the secondary portion (6, 7) is rolled and/or folded so that the secondary portion (6,7) at least substantially lies on, and is substantially parallel with, the axis¹ and at least a first part thereof is pushed inwardly into an interior (11) of the main portion (2) towards the centre thereof, substantially along the axis (3) wherein the secondary portion (6,7) forms a re-entrant fold (10) near the end (4) of the main portion (2)²; and
the first part of the secondary portion (6, 7) is fastened³ within the interior (11) of the main portion (2).
¹ Claim 1
² Present application, pg. 6, lines 20-23
³ Present application, pg. 7, line 10

## Patentansprüche

1. Verfahren zur Verpackung eines Airbags (1), wobei der Airbag (1) einen länglichen Hauptabschnitt (2), der im Wesentlichen entlang einer Längsachse (3) angeordnet ist, und einen zusätzlichen Abschnitt (6, 7) aufweist, der, wenn der Airbag (1) vollständig entfaltet ist, in eine Richtung ragt, die einen Winkel zur Achse (3) aufweist, wobei das Verfahren folgende Schritte umfasst:
Rollen und/oder Umlegen des zusätzlichen Abschnitts (6, 7), sodass der zusätzliche Abschnitt (6, 7) zumindest teilweise auf der Achse (3) liegt und im Wesentlichen parallel dazu verläuft;
Schieben von zumindest einem ersten Teil des zusätzlichen Abschnitts (6, 7) nach innen in einen Innenraum (11) des Hauptabschnitts (2) in Richtung seiner Mitte, im Wesentlichen entlang der Achse (3), wobei der zusätzliche Abschnitt (6, 7) eine zurückspringende Falte (10) nahe dem Ende (4) des Hauptabschnitts (2) bildet; und
Befestigen des erstes Teils des zusätzlichen Abschnitts (6, 7) im Innenraum (11) des Hauptabschnitts (2).

2. Verfahren nach Anspruch 1, wobei der zusätzliche Abschnitt (6, 7) einen mittigen Vorsprung (19) vom Ende (4) des Hauptabschnitts (2) aus bildet, mit einem allgemein ringförmigen Hohlraum (13) um den mittigen Vorsprung (19) herum.

3. Verfahren nach Anspruch 1 oder 2, wobei, wenn der Airbag (1) vollständig entfaltet ist, der zusätzliche Abschnitt (6, 7) in eine Richtung ragt, die einen Winkel von mindestens 30° bezogen auf die Achse (3) aufweist.

4. Verfahren nach Anspruch 1 bis 3, wobei, wenn der Airbag (1) vollständig entfaltet ist, der zusätzliche Abschnitt (6, 7) in eine Richtung ragt, die im Wesentlichen einen rechten Winkel zur Achse (3) aufweist.

5. Verfahren nach einem vorhergehenden Anspruch, wobei der Schritt des Einführens des ersten Teils des zusätzlichen Abschnitts (6, 7) in den Innenraum (11) des Hauptabschnitts (2) ein Schieben des ersten Teils des zusätzlichen Abschnitts (6, 7) in den Innenraum (11) des Hauptabschnitts (2) in eine Richtung umfasst, die im Wesentlichen parallel zur Achse (3) verläuft.

6. Verfahren nach einem vorhergehenden Anspruch, wobei nach dem Schritt des Einführens des ersten Teils des zusätzlichen Abschnitts (6, 7) in den Innenraum (11) des Hauptabschnitts (2) ein zweiter Teil des zusätzlichen Abschnitts (6, 7) aus dem Hauptabschnitt (2) ragt.

7. Verfahren nach Anspruch 6, das ferner den Schritt des Umlegens des zweiten Teils des zusätzlichen Abschnitts (6, 7) nach innen in Richtung des Hauptabschnitts (2) umfasst, sodass er nicht wesentlich aus dem Hauptabschnitt (2) ragt.

8. Verfahren nach Anspruch 6 oder 7, wobei das Einführen des ersten Teils des zusätzlichen Abschnitts (6, 7) in den Innenraum (11) des Hauptabschnitts (2) eine zurückspringende Falte (10) erzeugt.

9. Verfahren nach Anspruch 8, wobei, sobald der erste Teil des zusätzlichen Abschnitts (6, 7) in den Innenraum (11) des Hauptabschnitts (2) eingeführt wurde, ein allgemein kreisförmiger oder ringförmiger Hohlraum (13) um einen Bereich des ersten Teils herum vorhanden ist.

10. Verfahren nach Anspruch 9, das nach dem Einführen des ersten Teils des zusätzlichen Abschnitts (6, 7) in den Innenraum (11) des Hauptabschnitts (2) ferner den Schritt des Umlegens des zweiten Teils des zusätzlichen Abschnitts (6, 7) umfasst, sodass der zweite Teil im Wesentlichen in dem kreisförmigen oder ringförmigen Hohlraum (13) liegt.

11. Verfahren nach einem vorhergehenden Anspruch, wobei der Schritt des Bereitstellens einer Dichtungsanordnung den Schritt des Wickelns eines Dichtelements um ein Äußeres des Airbags (1) an oder nahe einem Ende seines Hauptabschnitts (2) umfasst, und wobei vorzugsweise das Dichtelement mindestens eine darin ausgebildete Schwächungslinie oder -stelle aufweist.

12. Verfahren nach einem vorhergehenden Anspruch, wobei der Airbag (1) einen ersten und zweiten zusätzlichen Abschnitt aufweist.

13. Verfahren nach Anspruch 12, wobei der erste und zweite zusätzliche Abschnitt an jeweiligen gegenüberliegenden Enden des Hauptabschnitts (2) vorgesehen sind.

14. Verfahren nach einem vorhergehenden Anspruch, wobei die Dichtanordnung so ausgebildet ist, dass, wenn der Airbag (1) durch Einleiten von Druckgas in den Innenraum (11) des Hauptabschnitts (2) gefüllt wird, sich der Hauptabschnitt (2) im Wesentlichen vollständig füllt, bevor die Dichtanordnung bricht oder reißt, damit der zweite Abschnitt (6, 7) gefüllt werden kann.

15. Gepackter Airbag, wobei der Airbag (1) einen länglichen Hauptabschnitt (2), der im Wesentlichen entlang einer Längsachse (3) angeordnet ist, und einen zusätzlichen Abschnitt (6, 7) aufweist, der, wenn der Airbag (1) vollständig entfaltet ist, in eine Richtung ragt, die einen Winkel zur Achse (3) aufweist, wobei:
der zusätzliche Abschnitt (6, 7) so gerollt und/oder umgelegt ist, dass der zusätzliche Abschnitt (6, 7) zumindest im Wesentlichen auf der Achse¹ liegt und im Wesentlichen parallel dazu verläuft, und zumindest ein erster Teil davon nach innen in einen Innenraum (11) des Hauptabschnitts (2) in Richtung seiner Mitte, im Wesentlichen entlang der Achse (3), geschoben ist, wobei der zusätzliche Abschnitt (6, 7) eine zurückspringende Falte (10) nahe dem Ende (4) des Hauptabschnitts (2)² bildet; und
der erste Teil des zusätzlichen Abschnitts (6, 7) im Innenraum (11) des Hauptabschnitts (2) befestigt³ ist.
¹Anspruch 1
²Vorliegende Anmeldung, S. 6, Zeilen 20-23
³Vorliegende Anmeldung, S. 7, Zeile 10

## Revendications

1. Procédé d'emballage d'un airbag (1), l'airbag (1) comportant une section principale (2) allongée qui est agencée essentiellement le long d'un axe longitudinal (3), et une section secondaire (6, 7) qui, quand l'airbag (1) est complètement déplié, dépasse dans une direction qui forme un angle par rapport à l'axe (3), le procédé comprenant les étapes consistant à :
rouler et/ou plier la section secondaire (6, 7) de telle manière que la section secondaire (6, 7) se trouve au moins essentiellement sur l'axe (3) et est sensiblement parallèle à celui-ci ;
pousser au moins une première partie de la section secondaire (6, 7) vers l'intérieur dans l'intérieur (11) de la section principale (2) en direction du centre de celle-ci, essentiellement le long de l'axe (3), la section secondaire (6, 7) formant un pli rentrant (10) près de l'extrémité (4) de la section principale (2) ; et
fixer la première partie de la section secondaire (6, 7) dans l'intérieur (11) de la section principale (2).

2. Procédé selon la revendication 1, dans lequel la section secondaire (6, 7) forme une protubérance centrale (19) en partant de l'extrémité (4) de la section principale (2), avec une cavité (13) globalement annulaire autour de la protubérance centrale (19).

3. Procédé selon la revendication 1 ou 2, dans lequel, quand l'airbag (1) est complètement déplié, la section secondaire (6, 7) dépasse dans une direction qui forme un angle d'au moins 30° par rapport à l'axe (3).

4. Procédé selon les revendications 1 à 3, dans lequel, quand l'airbag (1) est complètement déplié, la section secondaire (6, 7) dépasse dans une direction qui forme sensiblement un angle droit par rapport à l'axe (3).

5. Procédé selon l'une quelconque des revendications précédentes, dans lequel l'étape d'introduction de la première partie de la section secondaire (6, 7) dans l'intérieur (11) de la section principale (2) comprend la poussée de la première partie de la section secondaire (6, 7) dans l'intérieur (11) de la section principale (2) dans une direction qui est sensiblement parallèle à l'axe (3).

6. Procédé selon l'une quelconque des revendications précédentes, dans lequel, suite à l'étape d'introduction de la première partie de la section secondaire (6, 7) dans l'intérieur (11) de la section principale (2), une seconde partie de la section secondaire (6, 7) dépasse de la section principale (2).

7. Procédé selon la revendication 6, comprenant en outre l'étape consistant à plier la seconde partie de la section secondaire (6, 7) vers l'intérieur en direction de la section principale (2) de telle manière qu'elle ne dépasse pas sensiblement de la section principale (2).

8. Procédé selon la revendication 6 ou 7, dans lequel l'introduction de la première partie de la section secondaire (6, 7) dans l'intérieur (11) de la section principale (2) crée un pli rentrant (10).

9. Procédé selon la revendication 8, dans lequel, une fois la première partie de la section secondaire (6, 7) introduite dans l'intérieur (11) de la section principale (2), une cavité (13) globalement circulaire ou annulaire se trouve autour d'une zone de la première partie.

10. Procédé selon la revendication 9, comprenant en outre, après l'introduction de la première partie de la section secondaire (6, 7) dans l'intérieur (11) de la section principale (2), l'étape consistant à plier la seconde partie de la section secondaire (6, 7) de telle manière que la seconde partie se trouve essentiellement dans la cavité (13) circulaire ou annulaire.

11. Procédé selon l'une quelconque des revendications précédentes, dans lequel l'étape de mise à disposition d'un agencement d'étanchéité comprend l'étape consistant à envelopper un élément d'étanchéité autour de l'extérieur de l'airbag (1), sur ou près d'une extrémité de la section principale (2) de celui-ci, et de préférence dans lequel au moins une ligne ou un point de faiblesse est formé(e) dans l'élément d'étanchéité.

12. Procédé selon l'une quelconque des revendications précédentes, dans lequel l'airbag (1) comporte une première et une seconde section secondaire.

13. Procédé selon la revendication 12, dans lequel les première et seconde sections secondaires sont prévues à des extrémités opposées respectives de la section principale (2).

14. Procédé selon l'une quelconque des revendications précédentes, dans lequel l'agencement d'étanchéité est formé de telle manière que, quand l'airbag (1) est gonflé par l'introduction de gaz comprimé dans l'intérieur (11) de la section principale (2), la section principale (2) se gonfle essentiellement complètement avant que l'agencement d'étanchéité ne se brise ou se rompe pour permettre le gonflage de la section secondaire (6, 7).

15. Airbag emballé, l'airbag (1) comportant une section principale (2) allongée qui est agencée essentiellement le long d'un axe longitudinal (3), et une section secondaire (6, 7) qui, quand l'airbag (1) est complètement déplié, dépasse dans une direction qui forme un angle par rapport à l'axe (3), dans lequel :
la section secondaire (6, 7) est roulée et/ou pliée de telle manière que la section secondaire (6, 7) se trouve au moins essentiellement sur l'axe¹, et est sensiblement parallèle à celui-ci, et au moins une première partie de celle-ci est poussée vers l'intérieur dans l'intérieur (11) de la section principale (2) en direction du centre de celle-ci, essentiellement le long de l'axe (3) dans lequel la section secondaire (6, 7) forme un pli rentrant (10) près de l'extrémité (4) de la section principale (2)² ; et
la première partie de la section secondaire (6, 7) est fixée³ dans l'intérieur (11) de la section principale (2).
¹ Revendication 1
² Présente demande, p. 6, lignes 20-23
³ Présente demande, p. 7, ligne 10
